# FASCICULE DE BREVET EUROPEEN

(11) **EP 0 548 552 B1**
(45) Date de publication et mention de la délivrance du brevet: **15.01.1997**
(21) Numéro de dépôt: 92119846.1
(22) Date de dépôt: 21.11.1992
(51) Int. Cl.: C12J 1/04, C12J 1/10

(54) **Production de vinaigre**
Essigproduktion
Vinegar production

(30) Priorité: 20.12.1991 CH 3805/91
(43) Date de publication de la demande: 30.06.1993
(73) Titulaire: SOCIETE DES PRODUITS NESTLE S.A., 1800 Vevey (CH)
(72) Inventeur: Fleury, Kurt, CH-1814 La Tour-de-Peilz (CH); Kalina, Vladimir, CH-1012 Lausanne (CH); Zell, Jean-Jacques, CH-1807 Blonay (CH)
(74) Mandataire: Wavre, Claude-Alain

(56) Documents cités:
- EP-A- 0 185 407
- EP-A- 0 391 846
- DE-C- 833 792
- FR-A- 412 548
- FR-A- 508 629
- FR-A- 959 218
- US-A- 2 236 153
- US-A- 2 335 065

## Description

La présente invention a pour objet un procédé de production de vinaigre par fermentation ainsi qu'un appareil pour la mise en oeuvre de ce procédé.

La production mondiale de vinaigre est assurée aujourd'hui principalement par deux procédés, à savoir un procédé de fermentation proche des techniques ancestrales comprenant le ruissellement d'un moût alcoolique au travers d'un lit de copeaux de bois, et un procédé plus récent de fermentation submergée.

Une description détaillée de ces deux types de procédés peut être trouvée dans GB 781584 et GB 1101560, par exemple.

Comme on peut le voir dans ces deux brevets britanniques, et comme on peut en trouver confirmation dans US 4282257, par exemple, il apparaît problématique d'obtenir avec une productivité élevée un vinaigre présentant une teneur élevée en acide acétique. Si l'on modifie un procédé pour en augmenter la productivité, le vinaigre obtenu présente une teneur plus faible en acide acétique et inversément.

C'est ainsi que des productivités de 0,2-0,3 kg d'acide acétique par m³ de fermenteur et par h pour une teneur finale en acide acétique de 12-13% peuvents être considérés comme typiques pour un procédé de fermentation à ruissellement. Par rapport à ces chiffres, GB 781584 illustre une augmentation de productivité d'un facteur cinq, par exemple, mais pour produire un vinaigre à 7,5% d'acide acétique.

De même, le procédé de la fermentation submergée, plus sophistiqué et qui consomme beaucoup d'énergie, permet typiquement d'obtenir un vinaigre à 12-13% d'acide acétique avec une productivité de 1-2 kg/m³.h. Par rapport à ces chiffres, US 4282257 illustre une teneur finale en acide acétique augmentée à 20%, par exemple, mais obtenue avec une productivité apparemment inférieure à 0,5 kg/m³.h.

La présente invention a pour but de proposer un procédé de technologie simple, autrement dit un procédé de fermentation à ruissellement, qui permette d'obtenir avec une productivité élevée un vinaigre présentant une teneur en acide acétique élevée.

A cet effet, le procédé de production de vinaigre par fermentation selon la présente invention, dans lequel on fait ruisseler un moût de haut en bas au travers d'un lit de supports de bactéries acétiques, on recueille le moût au-dessous du lit, on le recircule au-dessus du lit après l'avoir refroidi et l'on insuffle un gaz contenant de l'oxygène au travers du lit, se distingue par le fait que:
1.1. on fait ruisseler le moût au travers d'un lit subdivisé en plusieurs couches superposées desdits supports alternant avec un ou plusieurs dispositifs échangeurs de chaleur horizontaux ajourés,
1.2. on fait fermenter le moût par des bactéries acétiques du genre Gluconobacter, et
1.3. on maintient dans le lit une température favorable à la croissance et/ou à l'activité des Gluconobacter qui ne présente pas une différence supérieure à 2°C sur toute la hauteur du lit.

De même, l'appareil pour la mise en oeuvre du procédé selon la présente invention, comprenant une colonne de fermentation, un récipient collecteur au-dessous de la colonne, un dispositif distributeur de moût au-dessus de la colonne, et une conduite de recirculation reliant le récipient collecteur au dispositif distributeur en passant par une pompe de recirculation et un échangeur de chaleur, se distingue par le fait que la colonne de fermentation comprend un lit de supports de bactéries acétiques subdivisé en plusieurs couches superposées desdits supports portées par des plateaux ajourés, ainsi que un ou plusieurs dispositifs échangeurs de chaleur horizontaux ajourés alternant avec lesdites couches.

Avec le présent procédé et le présent appareil, il est en effet possible de produire un vinaigre à environ 13-15% d'acide acétique avec une productivité de environ 1-2 kg/m³.h, par exemple, tout en utilisant une technologie simple de fermentation à ruissellement.

Cette augmentation des performances, par rapport à celles d'un procédé et d'un appareil de fermentation à ruissellement traditionnels, peut s'expliquer par le choix d'une bactérie acétique du genre Gluconobacter normalement utilisée en fermentation submergée, qui permet un meilleur transfert d'oxygène à la surface des supports, et par la subdivision du lit en plusieurs couches alternant avec des dispositifs échangeurs de chaleur qui permet de maintenir une différence de température inférieure ou égale à 2°C sur toute la hauteur du lit. Le maintien d'une température favorable, comprise entre 18 et 32°C, de préférence entre 26 et 32°C, par exemple, dans une marge de variation ne dépassant pas 2°C permet une distribution uniforme de la biomasse sur toute la hauteur du lit, en éliminant des zones d'inactivation excessive (température trop élevée) ainsi que des zones de croissance bactérienne et de productivité insuffisantes (température trop basse). En outre, la subdivision du lit en plusieurs couches permet également d'améliorer la circulation dudit gaz contenant de l'oxygène, tel que de l'air par exemple, au travers du lit, autrement dit l'aération nécessaire pour alimenter les bactéries en oxygène.

Dans le présent exposé, les teneurs en acide acétique ou en alcool sont exprimées en % en poids/volume lorsqu'elles ne sont pas exprimées en unités de poids par unités de volume.

Pour mettre en oeuvre le présent procédé, on peut utiliser comme supports de bactéries acétiques des copeaux, débris ou branchettes de pin, hêtre ou bouleau, par exemple, ou tout autre matériau poreux permettant aux bactéries de s'y fixer.

De manière générale, on peut faire ruisseler le moût au travers du lit à un débit correspondant à 0,2-1,5 fois le volume du lit par h. De même, on insuffle de préférence de l'air de bas en haut au travers du lit à un débit correspondant à 2-10 fois le volume du lit par h.

Dans une forme de réalisation particulière du présent procédé, pour coloniser les supports de bactéries acétiques, on peut faire ruisseler et on peut recirculer un vinaigre de fermentation submergée de cidre ou de vin, par exemple. On peut ensuite ajouter au vinaigre, en continu ou par intermittence, du cidre ou du vin. On peut même ajouter en continu du cidre ou du vin, et soutirer en continu le vinaigre produit.

Dans une forme de réalisation préférée du présent procédé, pour coloniser les supports de bactéries acétiques, on fait ruisseler et on recircule un vinaigre de fermentation submergée d'alcool. Un tel vinaigre peut être prélevé, avec les Gluconobacter qu'il contient, d'une cuve de fermentation submergée en service, dans un processus de fabrication de vinaigre d'alcool. On peut en utiliser une petite quantité correspondant à environ 5/100-20/100 du volume total du lit, par exemple. Pour obtenir un moût, on peut ajouter à ce vinaigre un mélange aqueux frais contenant 110-130 g/l d'alcool, 5-20 g/l d'acide acétique, du glucose, des minéraux et des vitamines, l'acide acétique étant de préférence incorporé au mélange sous forme de vinaigre de production, notamment filtré et stérilisé.

On peut ajouter ce mélange frais de manière à ajuster et à maintenir les teneurs de ce moût en acide acétique à 9,5-10,5%, en alcool à 2,0-3,0%, en glucose à 150-300 mg/l, et en minéraux et vitamines à des quantités nécessaires et adéquates pour la croissance et l'activité des Gluconobacter. Pour l'apport en ces derniers nutriments, on peut utiliser des formules connues de l'homme du métier, telles que la formule DS de Frings, par exemple.

On peut ajouter ce mélange frais en continu ou par intermittence, en fonction de la vitesse de production d'acide acétique.

Pour réaliser un premier cycle de production de vinaigre, on peut stopper l'addition de mélange frais lorsque la vitesse de production d'acide acétique atteint 0,2-0,3 g/l.h. Si l'on utilise un appareil dont le volume du collecteur est plus grand ou égal à celui du volume du lit, on peut atteindre cette vitesse de production avant que le collecteur ne soit plein. S'il est plein, on peut stopper l'addition de mélange frais avant que la vitesse de production n'atteigne le domaine indiqué. On peut continuer à faire ruisseler et à recirculer le moût jusqu'à ce que sa teneur en alcool soit inférieure ou égale à 7 g/l, par exemple, et l'on peut recueillir une grande partie du vinaigre ainsi obtenu, tout en laissant une petite partie, correspondant à environ 5/100-20/100 du volume total du lit, par exemple, en vue d'un cycle ultérieur.

Pour réaliser des cycles ultérieurs de production d'acide acétique, on peut ajouter dudit mélange frais à une petite partie du vinaigre non recueilli à la fin d'un cycle antérieur, pour obtenir un moût. On peut ajouter le mélange frais de manière à ajuster et à maintenir les teneurs du moût en acide acétique à 9,5-10,5%, en alcool à 2,0-3,0%, en glucose à 150-300 mg/l et en minéraux et vitamines à des valeurs nécessaires et adéquates pour la croissance et l'activité des Gluconobacter. On peut ajouter du mélange frais en continu ou par intermittence, tout en maintenant les teneurs du moût en alcool, en acide acétique et en nutriments dans les domaines indiqués, jusqu'à ce qu'on atteigne un volume limite imposé par les dimensions finies d'un appareil utilisé pour la mise en oeuvre du procédé. On peut stopper alors l'addition de mélange frais et continuer à faire ruisseler et à recirculer le moût jusqu'à ce que sa teneur en alcool soit inférieure ou égale à 7 g/l, par exemple, et l'on peut recueillir une grande partie du vinaigre obtenu, tout en laissant une petite partie en vue d'un cycle ultérieur.

On peut réaliser ainsi une série de cycles de production durant de préférence chacun de 50-120 h. La teneur en acide acétique du vinaigre ainsi obtenu peut atteindre 12-15%, par exemple, dès le premier cycle de production. La productivité avec laquelle ce vinaigre est ainsi obtenu augmente au cours des premiers cycles de production et peut atteindre rapidement une valeur de 1-2 kg/m³.h, par exemple, pour un rendement pouvant dépasser 85%.

Dans la série des cycles de production décrite ci-dessus, l'expression "on peut stopper l'addition de mélange frais" peut être comprise comme n'exigeant pas nécessairement un arrêt total de ladite addition, mais comme laissant ouverte la possibilité de continuer l'addition à un débit fortement réduit, notamment à un débit environ 5-15 fois inférieur, par exemple.

La série des cycles de production décrite ci-dessus peut être réalisée à une température de fermentation favorable comprise de préférence entre 26 et 32°C. Si l'on désire produire un vinaigre présentant une teneur en acide acétique comprise dans la partie supérieure du domaine indiqué, voire dépassant 15%, il est possible de poursuivre la fermentation à une température favorable située dans le bas du domaine préféré indiqué, voire au-dessous. C'est ainsi que pour une teneur en acide acétique de environ 15% on peut recommander une température comprise entre environ 26 et 28°C, et que pour une teneur en acide acétique allant jusqu'à 20% on peut recommander une température favorable descendant jusqu'à 18°C, par exemple.

Dans une variante de la forme de réalisation préférée ci-dessus du procédé selon la présente invention, dans les cycles de production dits ultérieurs, on abaisse ainsi la température de fermentation à une valeur favorable à l'activité des bactéries dans un moût à teneur élevée en acide acétique lorsque l'on a produit une quantité notable de moût à 9,5-10,5% d'acide acétique, par exemple après environ 20 - 40 h à compter du début du cycle, on stoppe alors l'addition de mélange frais et l'on ajoute, de préférence en continu, à un débit environ 5-15 fois inférieur au débit de mélange frais, un mélange concentré contenant 130-150 g/l d'acide acétique et 250-350 g/l d'alcool, du glucose, des minéraux et des vitamines. Dans cette variante, on peut réaliser ainsi une série de cycles de production durant de préférence également chacun de 50 - 120 h. La teneur en acide acétique du vinaigre ainsi obtenu peut atteindre environ 14 - 20 %, par exemple, la productivité pouvant demeurer supérieure à 1 kg/m³.h dans une partie inférieure au moins de ce domaine compris entre 14 et 16% environ.

L'appareil pour la mise en oeuvre du procédé selon la présente invention comprend donc une colonne de fermentation comprenant elle-même un lit de supports de bactéries acétiques subdivisé en plusieurs couches superposées portées par des plateaux ajourés, lesdits supports pouvant être des copeaux, débris ou branchettes de pin, hêtre ou bouleau par exemple, ou tout autre matériau poreux permettant aux bactéries de s'y fixer. La colonne comprend en outre un ou plusieurs dispositifs échangeurs de chaleur horizontaux qui alternent avec les couches de supports de bactéries acétiques.

Si l'on tient compte des dimensions usuelles des appareils traditionnels de production de vinaigre par fermentation à ruissellement, et que l'on désire les adapter aussi simplement que possible à la mise en oeuvre du présent procédé, on peut prévoir que le lit comprenne deux à huit couches de supports alternant avec un à sept dispositifs échangeurs de chaleur horizontaux, par exemple. Pour une hauteur totale du lit de environ 1-2 m, par exemple, on peut aussi prévoir des épaisseurs de couches comprises entre environ 15 et 50 cm. La surface des couches, autrement dit la section de la colonne, peut être choisie ou déterminée en fonction de la quantité de vinaigre que l'on désire produire par unité de temps.

Les plateaux ajourés peuvent être réalisés sous forme de claies, de grilles ou de plaques perforées en bois ou en acier inoxydable, par exemple. Dans une première forme de réalisation préférée du présent appareil, les plateaux ajourés et les échangeurs de chaleur horizontaux ajourés situés entre deux couches de supports sont confondus et peuvent être réalisés, par exemple, sous forme de plaques perforées échangeuses de chaleur, autrement dit de plaques perforées creuses dans lesquelles on peut faire circuler un liquide échangeur de chaleur, tel que de l'eau, par exemple.

Dans une deuxième forme de réalisation préférée du présent appareil, lesdits un ou plusieurs échangeurs de chaleur horizontaux ajourés comprennent chacun plusieurs gouttières horizontales parallèles, à profil un U ou en V par exemple, le fond de chaque gouttière étant percé d'une rangée de trous, ainsi que plusieurs tubes échangeurs de chaleur horizontaux parallèles, autrement dit des tubes dans lesquels on peut faire circuler un liquide échangeur de chaleur, disposés chacun au-dessous d'une rangée de trous.

L'appareil pour la mise en oeuvre du procédé selon la présente invention est décrit ci-après en référence au dessin annexé, donné à titre d'exemple, dans lequel:
- La Fig. 1 représente une vue schématique de ladite première forme de réalisation préférée du présent appareil,
- la Fig. 2 représente une vue en coupe horizontale d'une plaque perforée échangeuse de chaleur de la première forme de réalisation de l'appareil selon la Fig. 1,
- la Fig. 3 représente une vue en coupe verticale d'une plaque perforée échangeuse de chaleur de la première forme de réalisation de l'appareil selon la Fig. 1, et
- la Fig. 4 représente une vue schématique de ladite deuxième forme de réalisation préférée du présent appareil.

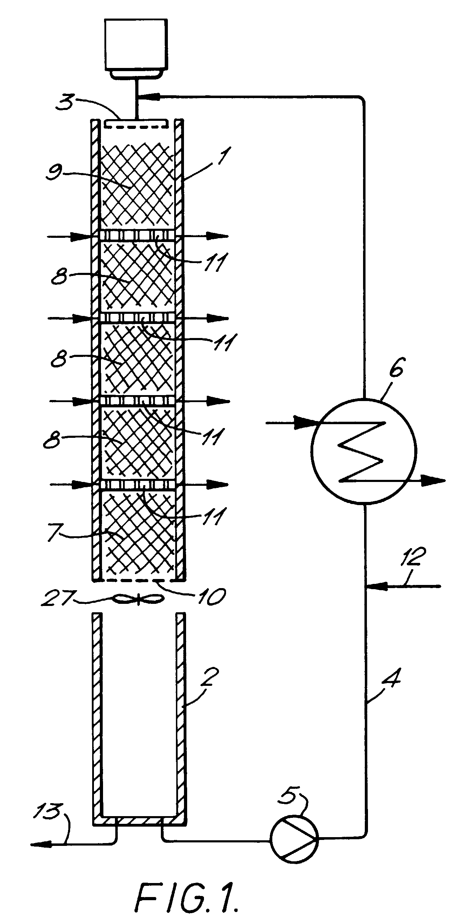

Dans la première forme de réalisation préférée représentée à la Fig. 1, le présent appareil comprend une colonne de fermentation 1, un récipient collecteur 2 au-dessous de la colonne, un dispositif distributeur de moût au-dessus de la colonne, et une conduite de recirculation 4 reliant le récipient collecteur 2 au dispositif distributeur 3 en passant par une pompe de recirculation 5 et un échangeur de chaleur 6.

La colonne de fermentation 1 comprend un lit de supports de bactéries acétiques subdivisé en plusieurs couches superposées 7, 8, 9 desdits supports portées par des plateaux ajourés 10, 11. Un plateau ajouré inférieur 10 soutenant une couche inférieure 7 du lit, à savoir la première couche du lit à compter du bas, est réalisé sous forme d'une claie ou d'une grille. Des plateaux ajourés intermédiaires, autrement dit les plateaux ajourés situés entre deux couches de supports, et lesdits échangeurs de chaleur horizontaux ajourés sont confondus et sont réalisés sous forme de plaques perforées échangeuses de chaleur 11. Ces plaques sont branchées en série ou en parallèle pour la circulation d'un fluide échangeur de chaleur.

Le dispositif distributeur 3 est réalisé sous forme de bras percé de trous tournant dans un plan horizontal au-dessus du lit, à savoir au-dessus d'une couche supérieure 9 du lit, autrement dit au-dessus de la dernière couche du lit à compter du bas.

On a représenté encore sur cette Fig. 1 une conduite d'alimentation en mélange frais 12 ainsi qu'une conduite d'évacuation de vinaigre 13 branchées chacune sur le collecteur 2.

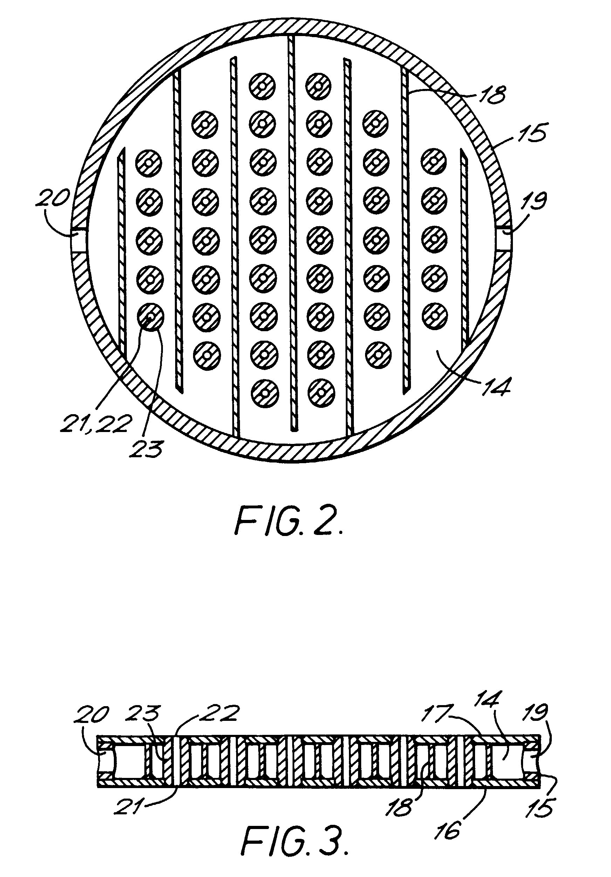

Une plaque perforée échangeuse de chaleur 11 de cette première forme d'exécution préférée de l'appareil selon la Fig. 1 est représentée plus en détail aux Fig. 2 et 3. Cette plaque est creuse, c'est-à-dire qu'elle renferme un espace intérieur libre 14 dans lequel on peut faire circuler un liquide échangeur de chaleur, notamment de l'eau. Cet espace est délimité par une paroi verticale cylindrique extérieure 15, un fond plat circulaire horizontal 16, et un couvercle plat circulaire horizontal 17. Cet espace est en outre subdivisé en couloirs parallèles disposés en chicane par l'intermédiaire de cloisons verticales 18. Des ouvertures 19 et 20 sont prévues dans la paroi verticale 15 pour l'entrée et la sortie d'un liquide échangeur de chaleur dans et hors de la chicane. Le fond 16 et le couvercle 17 sont percés de plusieurs rangées parallèles de perforations, chaque perforation 21 du fond étant reliée à une perforation correspondante 22 du couvercle par l'intermédiaire d'un segment cylindrique creux vertical 23 scellé au fond et au couvercle, à mi-distance entre deux cloisons 18.

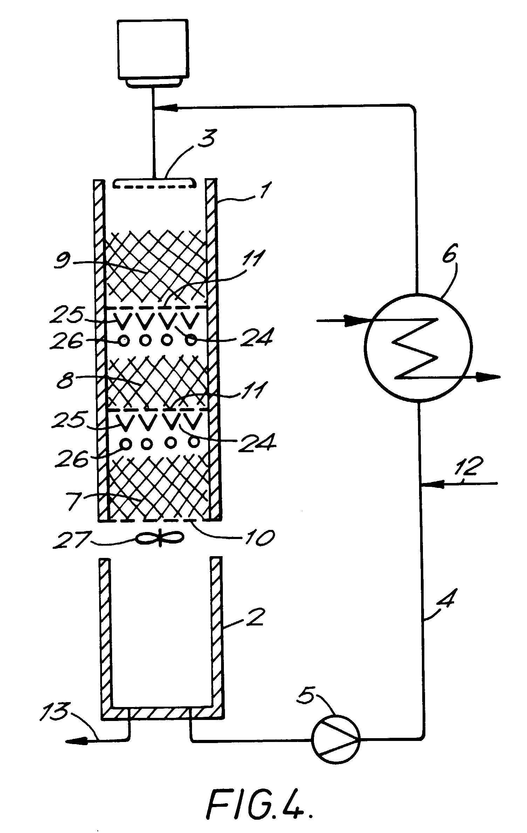

Dans la deuxième forme de réalisation préférée représentée à la Fig. 4, le présent appareil comprend également une colonne de fermentation 1, un récipient collecteur 2 au-dessous de la colonne, un dispositif distributeur de moût 3 au-dessus de la colonne, et une conduite de recirculation 4 reliant le récipient collecteur 2 au dispositif distributeur 3 en passant par une pompe de recirculation 5 et un échangeur de chaleur 6.

On a représenté également sur cette Fig. 4 une conduite d'alimentation en mélange frais 12 ainsi qu'une conduite d'évacuation de vinaigre 13 branchées chacune sur le collecteur 2.

La colonne de fermentation 1 comprend un lit de supports de bactéries acétiques subdivisé en plusieurs couches superposées 7, 8, 9 desdits supports portés par des plateaux ajourés 10, 11, tous réalisés sous forme de claies en bois. La colonne 1 comprend également des échangeurs de chaleur horizontaux ajourés 24 alternant avec les couches 7, 8, 9. Ces échangeurs de chaleur 24 comprennent chacun plusieurs gouttières parallèles 25 à profil en V, le fond de chaque gouttière étant percé d'une rangée de trous, ainsi que plusieurs tubes échangeurs de chaleur parallèles 26 disposés chacun au-dessous d'une rangée de trous, autrement dit aligné au-dessous des gouttières à profil en V.

Les exemples ci-après sont présentés à titre d'illustration du procédé de préparation de vinaigre selon la présente invention. Les pourcentages et parties y sont donnés en poids sauf indication contraire.

### Exemple 1

Pour mettre en oeuvre le présent procédé, on utilise un appareil du type représenté aux Fig. 1-3, dans lequel une colonne de 1,3 m de hauteur et 14 cm de diamètre, d'un volume de 20 l, comprend un lit de copeaux de pin subdivisé en 5 couches de environ 23 cm d'épaisseur, d'un volume total de 17 l. La première couche à compter du bas est supportée par une grille en acier inoxydable. Les autres couches sont chacune supportées par une plaque échangeuse de chaleur perforée en acier inoxydable présentant une épaisseur de 2 cm. Le collecteur présente un volume de 40 l.

On introduit dans le collecteur une petite quantité, égale à environ 1/10 du volume total du lit, d'un vinaigre de culture submergée que l'on prélève, avec les Gluconobacter qu'il contient, d'une cuve de fermentation submergée en service dans un processus de fabrication de vinaigre d'alcool. On colonise les copeaux de pin avec ces Gluconobacter en faisant ruisseler ce vinaigre au travers du lit et en le recyclant au-dessus du lit, tout en lui ajoutant un mélange aqueux frais contenant 120 g/l d'alcool, 10 g/l d'acide acétique, du glucose des minéraux et des vitamines.

On ajoute ce mélange frais de manière à ajuster d'abord et à maintenir ensuite, en fonction de la vitesse de production d'acide acétique, les teneurs de ce moût en acide acétique à 10,0-10,5%, en alcool à 2,0-2,5%, et en glucose à 150-170 mg/l. Les nutriments glucose, minéraux et vitamines sont ajoutés sous forme de la formule DS de Frings en quantités adéquates pour la croissance et l'activité des Gluconobacter. On recircule le moût à un débit égal à 0,4-0,5 fois le volume du lit par heure. On insuffle de l'air de bas en haut au travers du lit, sous une surpression de 5 mbar, à un débit égal à 3 fois le volume du lit par heure. On maintient la température du lit entre 28 et 30°C sur toute sa hauteur.

Lorsque la vitesse d'acétification atteint 0,25 kg d'acide acétique par m³ de lit et par h, on stoppe l'addition de mélange frais et l'on réalise un premier cycle de production de vinaigre en continuant à faire ruisseler et à recycler le moût jusqu'à ce que sa teneur en alcool descende à 3 g/l. La teneur en acide acétique du vinaigre ainsi obtenu est de environ 13%.

On recueille une grande partie du vinaigre ainsi obtenu et on en laisse une petite partie équivalant à 1/10 du volume du lit.

Pour réaliser un cycle ultérieur de production d'acide acétique, on ajoute du mélange frais au vinaigre laissé dans le collecteur pour obtenir un moût. On ajoute le mélange frais au moût de manière à ajuster et à maintenir les teneurs du moût en acide acétique à 10,0-10,5%, en alcool à 2,0-2,5% et en glucose à 150-170 mg/l. On recircule le moût à un débit égal à 1,3 fois le volume du lit par heure. On insuffle de l'air de bas en haut au travers de la colonne à un débit égal à 6 fois le volume du lit par heure.

Lorsque le collecteur est environ aux 4/5 plein, on stoppe l'addition de mélange frais et l'on continue à faire ruisseler et à recirculer le moût jusqu'à ce que sa teneur en alcool descende à 7 g/l. Ce moment est atteint après environ 90 h. On recueille une grande partie du vinaigre ainsi obtenu et on en laisse une petite partie équivalant à 1/10 du volume du lit.

On réalise ensuite huit autres cycles ultérieurs en les enchaînant de la même manière et en respectant les mêmes conditions. On obtient les résultats réunis dans le tableau 1 ci-après. On obtient ainsi en moyenne un volume de vinaigre équivalant à environ 1,7 fois le volume du lit, en environ 4 j, avec un rendement de environ 85% et une productivité de environ 2 kg d'acide acétique par m³ de lit et par h, pour une teneur en acide acétique de environ 133 g/l ou 13,3%.

**Tableau 1**

| Durée du cycle (h) | Vinaigre recueilli (l) | Teneur en acide acétique (g/l) | Teneur en alcool (g/l) | Productivité (kg/m³.h) |
|---|---|---|---|---|
| 88,5 | 26,2 | 129,6 | 5,3 | 1,94 |
| 88,9 | 26,7 | 131,1 | 5,6 | 1,99 |
| 94,4 | 29,0 | 135,6 | 6,6 | 2,12 |
| 99,0 | 29,6 | 137,0 | 7,1 | 2,08 |
| 97,7 | 28,8 | 132,0 | 8,5 | 1,96 |
| 89,9 | 28,1 | 129,6 | 7,8 | 2,05 |
| 92,7 | 28,8 | 133,6 | 7,0 | 2,12 |
| 92,5 | 29,3 | 130,5 | 7,5 | 2,10 |
| 94,6 | 29,8 | 133,6 | 5,3 | 2,14 |

| Moyenne: | | | | |
|---|---|---|---|---|
| 93,1 | 28,42 | 132,5 | 6,74 | 2,06 |

### Exemple 2

Avec un appareil semblable à celui utilisé à l'exemple 1, on met en oeuvre le présent procédé de manière semblable à celle décrite à l'exemple 1, à l'exception du fait que, dès la 36ème h du premier cycle ultérieur, et dès la 36ème h de six autres cycles ultérieurs, on maintient la température du lit à 26-28°C sur toute sa hauteur, on stoppe l'addition de mélange frais et l'on ajoute en continu, à un débit correspondant au 1/10 du débit de mélange frais, un mélange concentré, préparé à partir de vinaigre de production et d'alcool, contenant 100-110 g/l d'acide acétique et 277 g/l d'alcool. On poursuit ainsi chacun de ces sept cycles jusqu'à une durée totale de environ 100 h à compter du début de chaque cycle. On obtient les résultats présentés dans le tableau 2 ci-après. On obtient ainsi en moyenne un volume de vinaigre équivalant à 1,1 fois le volume du lit, en environ 4 j, avec une productivité de environ 1,3 kg d'acide acétique par m³ de lit et par h, pour une teneur en acide acétique de 146 g/l ou 14,6%.

**Tableau 2**

| Durée du cycle (h) | Vinaigre recueilli (l) | Teneur en acide acétique (g/l) | Teneur en alcool (g/l) | Productivité (kg/m³.h) |
|---|---|---|---|---|
| 96,3 | 18,9 | 143,6 | 10,4 | 1,31 |
| 99,1 | 18,6 | 145,8 | 7,8 | 1,27 |
| 101,4 | 18,3 | 146,4 | 8,4 | 1,22 |
| 102,9 | 18,4 | 144,6 | 7,9 | 1,18 |
| 103,0 | 19,1 | 147,6 | 9,4 | 1,28 |
| 97,2 | 19,6 | 144,0 | 7,8 | 1,36 |
| 99,8 | 18,7 | 150,0 | 7,0 | 1,31 |

| Moyenne: | | | | |
|---|---|---|---|---|
| 100,0 | 18,8 | 146,0 | 8,38 | 1,27 |

## Revendications

1. Procédé de production de vinaigre par fermentation, dans lequel on fait ruisseler un moût de haut en bas au travers d'un lit de supports de bactéries acétiques, on recueille le moût au-dessous du lit, on le recircule au-dessus du lit après l'avoir refroidi et l'on insuffle un gaz contenant de l'oxygène au travers du lit, caractérisé par le fait que:
1.1. on fait ruisseler le moût au travers d'un lit subdivisé en plusieurs couches superposées desdits supports alternant avec un ou plusieurs dispositifs échangeurs de chaleur horizontaux ajourés,
1.2. on fait fermenter le moût par des bactéries acétiques du genre Gluconobacter, et
1.3. on maintient dans le lit une température favorable à la croissance et/ou à l'activité des Gluconobacter qui ne présente pas une différence supérieure à 2°C sur toute la hauteur du lit.

2. Procédé selon la revendication 1, caractérisé par le fait que ladite température favorable est de 18-32°C, de préférence 26-32°C.

3. Procédé selon la revendication 1, caractérisé par le fait que l'on maintient dans le moût une teneur de glucose supérieure à 150 mg/l.

4. Procédé selon la revendication 1, caractérisé par le fait que l'on fait ruisseler le moût au travers du lit à un débit correspondant à 0,2-1,5 fois le volume du lit par h, et que l'on insuffle de l'air de bas en haut au travers du lit à un débit correspondant à 2-10 fois le volume du lit par h.

5. Procédé selon la revendication 1, caractérisé par le fait que lesdits supports sont des copeaux, débris ou branchettes de pin, hêtre ou bouleau.

6. Procédé selon la revendication 1, caractérisé par le fait que:
6.1. pour coloniser lesdits supports avec des Gluconobacter, on fait ruisseler et on recircule un vinaigre de culture submergée, on ajoute au vinaigre en continu ou par intermittence, en fonction de la vitesse de production d'acide acétique, un mélange aqueux frais contenant 110-130 g/l d'alcool, 5-20 g/l d'acide acétique, du glucose, des minéraux et des vitamines, de manière à obtenir un moût dont on ajuste et on maintient les teneurs en acide acétique à 9,5-10,5%, en alcool à 2,0-3,0% et en glucose à 150-300 mg/l,
6.2. pour réaliser un premier cycle de production de vinaigre, on stoppe l'addition de mélange frais lorsque la vitesse de production d'acide acétique atteint 0,2-0,3 g/l.h, on continue à faire ruisseler et à recirculer le moût jusqu'à ce que sa teneur en alcool soit inférieure ou égale à 7 g/l, et l'on recueille une grande partie du vinaigre ainsi obtenu,
6.3. pour réaliser des cycles ultérieurs de production d'acide acétique, on ajoute dudit mélange frais à une petite partie de vinaigre non recueillie à la fin d'un cycle antérieur de manière à reconstituer une composition du moût selon 6.1., on fait ruisseler et recirculer le moût tout en lui ajoutant en continu ou par intermittence du mélange frais de manière à maintenir sa composition selon 6.1, on stoppe l'addition de mélange frais, on continue à faire ruisseler et à recirculer le moût jusqu'à ce que sa teneur en alcool soit inférieure ou égale à 7 g/l, et l'on recueille une grande partie du vinaigre ainsi obtenu.

7. Appareil pour la mise en oeuvre du procédé selon la revendication 1, comprenant une colonne de fermentation (1), un récipient collecteur (2) au-dessous de la colonne, un dispositif distributeur (3) de moût au-dessus de la colonne, et une conduite de recirculation (4) reliant le récipient collecteur au dispositif distributeur en passant par une pompe de recirculation (5) et un échangeur de chaleur (6), caractérisé par le fait que la colonne de fermentation comprend un lit de supports de bactéries acétiques subdivisé en plusieurs couches superposées (7,8,9) desdits supports portées par des plateaux ajourés (10,11), ainsi que un ou plusieurs dispositifs échangeurs de chaleur ajourés (11) alternant avec lesdites couches.

8. Appareil selon la revendication 7 caractérisé par le fait que les plateaux ajourés et les échangeurs de chaleur horizontaux ajourés situés entre deux couches de supports sont confondus et sont réalisés sous forme de plaques perforées échangeuses de chaleur.

9. Appareil selon la revendication 7, caractérisé par le fait que lesdits un ou plusieurs dispositifs échangeurs de chaleur horizontaux comprennent chacun plusieurs gouttières parallèles (25), le fond de chaque gouttière étant percé d'une rangée de trous, ainsi que plusieurs tubes échangeurs de chaleur parallèles (26) disposés chacun au-dessous d'une rangée de trous.

10. Appareil selon la revendication 7, caractérisé par le fait que ledit lit comprend deux à huit couches de supports alternant avec un à sept dispositifs échangeurs de chaleur horizontaux, et que les supports sont des copeaux débris ou branchettes de pin, hêtre ou bouleau.

## Patentansprüche

1. Verfahren zur Herstellung von Essig durch Gärung, in welchem Verfahren man eine Maische von oben nach unten durch ein Trägerbett von Essigsäurebakterien rieseln läßt, die Maische unter dem Bett auffängt, sie nach einem Abkühlen auf das Bett zurückführt und durch das Bett ein sauerstoffhältiges Gas einbläst, dadurch gekennzeichnet, daß man:
1.1. die Maische durch ein Bett rieseln läßt, das in mehrere übereinanderliegende Schichten des Trägers unterteilt ist, die mit einem oder mehreren horizontalen, durchbrochenen Wärmeaustauschern alternieren,
1.2. die Maische von Essigsäurebakterien der Gattung Gluconobacter vergären läßt und
1.3. in dem Bett eine für das Wachstum und/oder die Aktivität der Gluconobacter-Bakterien günstige Temperatur aufrechthält, die über die gesamte Höhe des Bettes keinen Unterschied von mehr als 2°C aufweist.

2. Verfahren nach Anspruch 1, dadurch gekennzeichnet, daß diese günstige Temperatur 18-32°C, vorzugsweise 26-32°C beträgt.

3. Verfahren nach Anspruch 1, dadurch gekennzeichnet, daß man in der Maische einen Glucosegehalt über 150 mg/l aufrechterhält.

4. Verfahren nach Anspruch 1, dadurch gekennzeichnet, daß man die Maische mit einem Durchsatz entsprechend dem 0,2-1,5-fachen des Bettvolumens pro Stunde durch das Bett rieseln läßt und daß man Luft von unten nach oben durch das Bett mit einem Durchsatz entsprechend dem 2-10-fachen des Bettvolumens pro h bläst.

5. Verfahren nach Anspruch 1, dadurch gekennzeichnet, daß die Träger Späne, Abfälle oder Kleingeäst von Kiefer, Buche oder Birke sind.

6. Verfahren nach Anspruch 1, dadurch gekennzeichnet, daß man:
6.1. zum Besiedeln der Träger mit Gluconobacter einen Essig aus Submerskultur rieseln läßt und im Kreislauf führt, dem Essig kontinuierlich oder intermittierend, in Abhängigkeit von der Geschwindigkeit der Essigsäureproduktion, ein frisches wäßriges Gemisch mit einem Gehalt an 110-130 g/l Alkohol, 5-20 g/l Essigsäure, Glucose, Mineralen und Vitaminen derart zusetzt, daß man eine Maische erhält, deren Gehalte an Essigsäure, Alkohol und Glucose man auf eine Menge von 9,5-10,5 %, 2,0-3,0 % bzw. 150-300 mg/l einstellt und aufrechterhält,
6.2. zur Vornahme eines ersten Essig-Produktionscyclus die Zugabe des frischen Gemisches abbricht, sobald die Produktionsgeschwindigkeit der Essigsäure 0,2-0,3 g/l.h erreicht, die Maische weiterhin rieseln läßt und im Kreislauf führt, bis ihr Alkoholgehalt weniger als oder gleich 7 g/l beträgt und einen Großteil des so erhaltenen Essigs gewinnt,
6.3. zur Vornahme weiterer Cyclen der Essigsäureproduktion das frische Gemisch zu einem kleinen Teil Essig zusetzt, der am Ende eines vorangegangenen Cyclus nicht gewonnen wurde, um eine Maischenzusammensetzung gemäß 6.1. zu rekonstituieren, die Maische rieseln läßt und im Kreislauf führt und ihr kontinuierlich oder intermittierend frisches Gemisch zusetzt, um ihre Zusammensetzung entsprechend 6.1. aufrechtzuerhalten, die Zugabe des frischen Gemisches abbricht, die Maische weiterrieseln läßt und im Kreislauf führt, bis ihr Alkoholgehalt weniger als oder gleich 7 g/l beträgt und einen Großteil des so erhaltenen Essigs gewinnt.

7. Vorrichtung zur Ausführung des Verfahrens nach Anspruch 1, umfassend eine Fermentationskolonne (1), einen Auffangbehälter (2) unter der Kolonne, einen Verteiler (3) für die Maische oberhalb der Kolonne und eine Rücklaufleitung (4), die den Auffangbehälter über eine Umlaufpumpe (5) und einen Wärmeaustauscher (6) mit dem Verteiler verbindet, dadurch gekennzeichnet, daß die Fermentationskolonne ein Trägerbett von Essigsäurebakterien umfaßt, das in mehrere übereinanderliegende Schichten (7,8,9) der Träger unterteilt ist, die von Lochplatten (10,11) abgestützt sind, sowie einen oder mehrere durchbrochene Wärmeaustauscher (11) umfaßt, die mit diesen Schichten alternieren.

8. Vorrichtung nach Anspruch 7, dadurch gekennzeichnet, daß die Lochplatten und die durchbrochenen horizontalen Wärmeaustauscher, die zwischen zwei Trägerschichten liegen, vereint und als perforierte Wärmeaustauschplatten ausgebildet sind.

9. Vorrichtung nach Anspruch 7, dadurch gekennzeichnet, daß dieser eine oder diese mehreren horizontalen Wärmeaustauscher jeweils mehrere parallele Rinnen (25) aufweisen, wobei der Boden jeder Rinne von einer Reihe von Löchern durchbohrt ist, sowie mehrere parallele Wärmeaustauscherrohre (26) aufweisen, die jeweils unter einer Reihe von Löchern angeordnet sind.

10. Vorrichtung nach Anspruch 7, dadurch gekennzeichnet, daß das Bett zwei bis acht Trägerschichten abwechselnd mit ein bis sieben horizontalen Wärmeaustauschern umfaßt und daß die Träger Späne, Abfälle oder Kleingeäst von Kiefer, Buche oder Birke sind.

## Claims

1. Process for the production of vinegar by fermentation, in which a must is made to trickle downwards through a bed of acetic bacteria supports, the must is collected beneath the bed and, after cooling, is recirculated above the bed and an oxygen-containing gas is passed through the bed, characterized in that :
1.1 the must is made to trickle through a bed subdivided into several superimposed layers of the said supports alternating with one or more perforated horizontal heat exchanger devices,
1.2 the must is fermented by acetic bacteria of the genus Gluconobacter and
1.3 a temperature favourable to the growth and/or to the activity of the Gluconobacter is maintained in the bed and does not differ by more than 2°C over all the height of the bed.

2. Process according to claim 1, characterized in that the said favourable temperature is 18-32°C, preferably 26-32°C.

3. Process according to claim 1, characterized in that a glucose content above 150 mg/l is maintained in the must.

4. Process according to claim 1, characterized in that the must is made to trickle through the bed at a rate corresponding to 0.2-1.5 times the volume of the bed per hour and in that air is blown upwards through the bed at a rate corresponding to 2-10 times the volume of the bed per hour.

5. Process according to claim 1, characterized in that the said supports are chips, debris or small branches of pine, beech or birch.

6. Process according to claim 1, characterized in that :
6.1 to colonize the said supports with Gluconobacter, a submerged culture vinegar is trickled and recirculated, a fresh aqueous mixture containing 110-130 g/l of alcohol, 5-20 g/l of acetic acid, glucose, minerals and vitamins is continuously or intermittently added to the vinegar depending on the acetic acid production rate, so as to obtain a must which is adjusted to and maintained at an acetic acid content of 9.5-10.5 %, an alcohol content of 2.0-3.0 % and a glucose content of 150-300 mg/l,
6.2 to carry out a first vinegar production cycle, the addition of fresh mixture is stopped when the acetic acid production rate reaches 0.2-0.3 g/l.h, trickling and recirculation of the must is continued until its alcohol content is less than or equal to 7 g/l and a large part of the vinegar thus obtained is collected,
6.3 to carry out subsequent acetic acid production cycles, the said fresh mixture is added to a small portion of vinegar which was not collected at the end of a previous cycle so as to restore the must to a composition according to 6.1, the must is trickled and recirculated while fresh mixture is continuously or intermittently added to maintain its composition according to 6.1, the addition of fresh mixture is stopped, trickling and recirculation of the must are continued until its alcohol content is less than or equal to 7 g/l and a large part of the vinegar thus obtained is collected.

7. Apparatus for carrying out the process according to claim 1, comprising a fermentation column (1) a collecting vessel (2) beneath the column, a must distributor device (3) above the column, and a recirculation pipe (4) connecting the collecting vessel to the distributor device via a recirculating pump (5) and a heat exchanger (6), characterized in that the fermentation column comprises a bed of acetic bacteria supports subdivided into several superimposed layers (7, 8, 9) of the said supports carried by perforated plates (10, 11) as well as one or more perforated heat exchanger devices (11) alternating with the said layers.

8. Apparatus according to claim 7 characterized in that the perforated plates and the perforated horizontal heat exchangers situated between two layers of supports are identical and are made in the form of perforated heat exchanger plates.

9. Apparatus according to claim 7 characterized in that each of the said horizontal heat exchanger devices comprises several parallel channels (25), the bottom of each channel being drilled with a row of holes, as well as several parallel heat exchanger tubes (26), each arranged beneath a row of holes.

10. Apparatus according to claim 7, characterized in that the said bed comprises two to eight layers of supports alternating with one to seven horizontal heat exchanger devices, and in that the supports are chips, debris or small branches of pine, beech or birch.
